# EUROPEAN PATENT APPLICATION

(11) **EP 2 525 344 A1**
(43) Date of publication of application: **21.11.2012**
(21) Application number: 11747337.1
(22) Date of filing: 22.02.2011
(51) Int. Cl.: G09G 3/20, G09G 3/36, H04N 1/405, H04N 1/46, H04N 9/30

(54) **IMAGE DISPLAY DEVICE AND IMAGE DISPLAY METHOD**

(30) Priority: 26.02.2010 JP 2010043092
(71) Applicant: Sharp Kabushiki Kaisha, Osaka-shi, Osaka 545-8522 (JP)
(72) Inventor: NAKAGAWA, Shinji, Osaka-shi, Osaka 545 - 8522 (JP); FURUKAWA, Hiroyuki, Osaka-shi, Osaka 545 - 8522 (JP); YOSHIYAMA, Kazuyoshi, Osaka-shi, Osaka 545 - 8522 (JP); KONDOH, Naoko, Osaka-shi, Osaka 545 - 8522 (JP)
(74) Representative: Goddar, Heinz J.
(86) International application number: PCT/JP2011/053855
(87) International publication number: WO 2011/105376

(57) **Abstract**

Provided is an image display device having pixels each of which includes sub-pixels of four or more colors and requires fewer dither matrices. This image display device includes a display section in which color filters of sub-pixel colors that are M colors in total including three principal colors of red, green, and blue, as well as at least one color other than the three principal colors are arranged regularly and a gray-scale processing section (50) that performs gray-scale processing by a dither method with respect to an input image signal. The M sub-pixel colors are divided into N groups (G₁ to G_{N}) in such a manner that there is at least one group to which two or more colors belong. The gray-scale processing section (50) includes dither matrix storage ROMs (54₁ to 54_{N}) that store N combinations of dither matrices corresponding to the N groups, respectively.

## Description

### Technical Field

The present invention relates to an display device that performs the gray-scale processing by using a dither method, and particularly relates to an image display device having pixels each of which is composed of sub-pixels of four or more colors, and to an image display method used in this image display device.

### Background Art

Conventionally, image display devices having pixels each of which is composed of three sub-pixels for displaying three primary colors of red (R), green (G), and blue (B) so as to perform color display have been spread widely. Besides, reproduction by area gradation and time gradation using the dither method has been known as a technique for preventing pseudo-contours as factors for degrading image quality in a conventional image display device. In the dither method, numerical value data called "dither matrices" are used, and small amounts of noises generated from the dither matrices are superimposed on original images, so that pseudo-contours can be eliminated (see, for example, JP2000-188702A).

It should be noted that it is conventionally usual that a plurality of dither matrices having different factors from one another are stored in, for example, ROMs, and some of the dither matrices are selected and used for each color or each field.

### Disclosure of the Invention

Recently, in order to expand the color reproduction range (range of colors that can be displayed), image display devices having the following configuration are becoming practically applied: each pixel therein is composed offour or more sub-pixels, which are sub-pixels of three colors of red, green, and blue, and a sub-pixel of, for example, yellow or cyan additionally.

In the case where different dither matrices are used for different colors, respectively in an image display device in which each pixel is thus composed of sub-pixels of four or more colors as conventionally, it is necessary to prepare many dither matrices. In this case, for example, development costs for generation of dither matrices increase, and a greater memory capacity necessary for storing the dither matrices in an image display device is required. Therefore, there arises a problem of an increase in the device manufacturing costs.

In light of the above-described problem, it is an object of the present invention to provide an image display device having pixels each of which includes sub-pixels of four or more colors and requiring fewer dither matrices, and an image display method that require fewer dither matrices.

To achieve the above-described object, an image display device disclosed herein includes: a display section in which color filters of sub-pixel colors that are M colors in total including three principal colors of red, green, and blue, as well as at least one color other than the three principal colors are arranged regularly; and a gray-scale processing section that performs gray-scale processing by a dither method with respect to an input image signal, wherein the M sub-pixel colors are divided into N groups in such a manner that there is at least one group to which two or more colors belong, and the gray-scale processing section includes dither matrix storage parts that store N combinations of dither matrices corresponding to the N groups, respectively.

Further, an image display method disclosed herein is a method for displaying an image on a display section in which color filters of sub-pixel colors that are M colors in total including three principal colors of red, green, and blue, as well as at least one color other than the three principal colors are arranged regularly, and the method divides the M sub-pixel colors into N groups in such a manner that there is at least one group to which two or more colors belong; and performs gray-scale processing by a dither method with respect to an input image signal, by using N combinations of dither matrices that correspond to the N groups, respectively.

The present invention makes it possible to provide an image display device having pixels each of which includes sub-pixels of four or more colors and requiring fewer dither matrices, and an image display method that require fewer dither matrices.

### Brief Description of Drawings

[FIG. 1] FIG. 1 is a plan view showing a schematic configuration of an active matrix substrate provided in a liquid crystal display device according to Embodiment 1.
[FIG. 2] FIG. 2 is a plan view showing a schematic configuration of the color filter substrate provided in a liquid crystal display device according to Embodiment 1.
[FIG. 3] FIG. 3 is a cross-sectional view showing a schematic structure of the liquid crystal display device according to Embodiment 1.
[FIG. 4] FIG. 4 is a block diagram showing a schematic configuration of a gray-scale processing circuit provided in the liquid crystal display device according to Embodiment 1.
[FIG. 5] FIG. 5 shows an exemplary output image signal in the case where an input image signal is simply quantized without being subjected to dither processing.
[FIG. 6] FIG. 6 shows an exemplary output image signal in the case where an input image signal is quantized after being subjected to dither processing.
[FIG. 7A] FIG. 7A is a schematic plan view showing an exemplary color filter arrangement that is preferable in Embodiment 1.
[FIG. 7B] FIG. 7B is a schematic plan view showing an exemplary color filter arrangement that is preferable in Embodiment 1.
[FIG. 7C] FIG. 7C is a schematic plan view showing an exemplary color filter arrangement that is preferable in Embodiment 1.
[FIG. 8A] FIG. 8A is a schematic plan view showing an exemplary color filter arrangement that is preferable in Embodiment 1.
[FIG. 8B] FIG. 8B is a schematic plan view showing an exemplary color filter arrangement that is preferable in Embodiment 1.
[FIG. 8C] FIG. 8C is a schematic plan view showing an exemplary color filter arrangement that is preferable in Embodiment 1.
[FIG. 9] FIG. 9 is a schematic plan view showing an exemplary color filter arrangement that is preferable in Embodiment 2
[FIG. 10] Fig. 10 is a schematic plan view showing an exemplary color filter arrangement that is preferable in Embodiment 2.
[FIG. 11] FIG. 11 is a schematic plan view showing an exemplary color filter arrangement that is preferable in Embodiment 2.
[FIG. 12] FIG. 12 is a schematic plan view showing an exemplary color filter arrangement that is preferable in Embodiment 2.
[FIG. 13] FIG. 13 is a schematic plan view showing an exemplary color filter arrangement that is preferable in Embodiment 2.
[FIG. 14] FIG. 14 is a schematic plan view showing an exemplary color filter arrangement that is preferable in Embodiment 2.
[FIG. 15] FIG. 15 is a schematic plan view showing an exemplary color filter arrangement that is preferable in Embodiment 2.
[FIG. 16] FIG. 16 is a schematic plan view showing an exemplary color filter arrangement that is preferable in Embodiment 2.
[FIG. 17] FIG. 17 is a schematic plan view showing an exemplary color filter arrangement that is preferable in Embodiment 2.
[FIG. 18] FIG. 18 is a schematic plan view showing an exemplary color filter arrangement that is preferable in Embodiment 2.
[FIG. 19] FIG. 19 is a schematic plan view showing an exemplary color filter arrangement that is preferable in Embodiment 2.
[FIG. 20] FIG. 20 is a schematic plan view showing an exemplary color filter arrangement that is preferable in Embodiment 2.
[FIG. 21] FIG. 21 is a schematic plan view showing an exemplary color filter arrangement that is preferable in Embodiment 2.
[FIG. 22] FIG. 22 is a schematic plan view showing an exemplary color filter arrangement that is preferable in Embodiment 2.
[FIG. 23] FIG. 23 is a schematic plan view showing an exemplary color filter arrangement that is preferable in Embodiment 2.
[FIG. 24] FIG. 24 is a schematic plan view showing an exemplary color filter arrangement that is preferable in Embodiment 2.
[FIG. 25] FIG. 25 is a schematic plan view showing an exemplary color filter arrangement that is preferable in Embodiment 2.
[FIG. 26] FIG. 26 is a schematic plan view showing an exemplary color filter arrangement that is preferable in Embodiment 2.
[FIG. 27] FIG. 27 is a schematic plan view showing an exemplary color filter arrangement that is preferable in Embodiment 2.
[FIG. 28] FIG. 28 is a schematic plan view showing an exemplary color filter arrangement that is preferable in Embodiment 2.
[FIG. 29] FIG. 29 is a schematic plan view showing an exemplary color filter arrangement that is preferable in Embodiment 2.
[FIG. 30] FIG. 30 is a schematic plan view showing an exemplary color filter arrangement that is preferable in Embodiment 2.
[FIG. 31] FIG. 31 is a schematic plan view showing an exemplary color filter arrangement that is preferable in Embodiment 2.
[FIG. 32] FIG. 32 is a schematic plan view showing an exemplary color filter arrangement that is preferable in Embodiment 2.
[FIG. 33] FIG. 33 is a schematic plan view showing an exemplary color filter arrangement that is preferable in Embodiment 2.
[FIG. 34] FIG. 34 is a schematic plan view showing an exemplary color filter arrangement that is preferable in Embodiment 2.
[FIG. 35] FIG. 35 is a schematic plan view showing an exemplary color filter arrangement that is preferable in Embodiment 2.
[FIG. 36] FIG. 36 is a schematic plan view showing an exemplary color filter arrangement that is preferable in Embodiment 2.
[FIG. 37] FIG. 37 is a schematic plan view showing an exemplary color filter arrangement that is preferable in Embodiment 2.
[FIG. 38] FIG. 38 is a schematic plan view showing an exemplary color filter arrangement that is preferable in Embodiment 3.
[FIG. 39] FIG. 39 is a schematic plan view showing an exemplary color filter arrangement that is preferable in Embodiment 3.

### Embodiments for Carrying Out the Invention

An image display device according to one embodiment, of the present invention includes a display section in which color filters of sub-pixel colors that are M colors in total including three principal colors of red, green, and blue, as well as at least one color other than the three principal colors, are arranged regularly, and a gray-scale processing section that performs gray-scale processing by a dither method with respect to an input image signal, wherein the M sub-pixel colors are divided into N groups in such a manner that there is at least one group to which two or more colors belong, and the gray-scale processing section includes dither matrix storage parts that store N combinations of dither matrices corresponding to the N groups of the sub-pixel colors, respectively.

In configuration, the M sub-pixel colors are divided into N groups in such a manner that there is at least one group to which two or more colors belong. In other words, a relationship of N<M is satisfied. Besides, since the gray-scale processing section includes the dither matrix storage parts that store N combinations of dither matrices corresponding to the N groups, respectively, only fewer dither matrices are required, as compared with a case where M groups of dither matrices are prepared so as to correspond to all of the M sub-pixel colors, respectively. Therefore, only a smaller storage capacity is required for a dither matrix storage part. This makes it possible to suppress an increase in the development costs for generating dither matrices even in the case where the number (M) of sub-pixel colors increases. Besides, this also makes it possible to suppress an increase in a memory capacity required for storing dither matrices in an image display device. As a result, an increase in the device manufacturing costs can be suppressed.

In the image display device according to the present embodiment, the gray-scale processing section preferably includes a selector that selects a dither coefficient out of N combinations of dither matrices in the dither matrix storage parts, based on position information of the input image signal; a limiter-equipped adder that adds a dither coefficient selected by the selector to an input image signal, limits the addition result under predetermined conditions and outputs the same and a quantizer that decreases the number of bits of an output from the limiter-equipped adder. This configuration allows the quantization to be performed after the addition of noise components by the dither method, thereby making it possible to suppress image quality degradation, for example, a pseudo-contour generated due to the reduction of the number of gray levels or the like.

In the image display device according to the present embodiment, sub-pixel colors having brightnesses close to one another, among the M sub-pixel colors, preferably belong to the group. In this case, the following configuration is preferably: in the display section, the color filters are arranged in such a manner that the color filters of the sub-pixel colors belonging to the same group are not adjacent to one another in a horizontal direction. Alternatively, in the display section, the following configuration is also preferable: in the display section, the color filters are arranged in such a manner that the color filters of the sub-pixel colors belonging to the same group are not adjacent to one another in any of a horizontal direction and a vertical direction. Such a configuration can suppress the generation of artifacts that could function as factors of image quality degradation.

The M sub-pixel colors are, for example, four colors in total that include three primary colors of red, green, and blue, as well as one color other than the three primary colors. In this case, the one color other than the three primary colors is preferably any one of the following: cyan; magenta; yellow; white; red having a chroma different from that of the red as the primary color; green having a chroma different from that of the green as the primary color; and blue having a chroma different from that of the blue as the primary color.

Alternatively, the M sub-pixel colors may be five colors in total that include three primary colors of red, green, and blue, as well as two colors other than the three primary colors. In this case, the two colors other than the three primary colors are preferably any two of the following: cyan; magenta; yellow; white; red having a chroma different from that of the red as the primary color; green having a chroma different from that of the green as the primary color; and blue having a chroma different from that of the blue as the primary color.

Alternatively the M sub-pixel colors may be six colors in total that include three primary colors of red, green, and blue, as well as three colors other than the three primary colors. In this case, the three colors other than the three primary colors are preferably any three of the following: cyan; magenta; yellow; white; red having a chroma different from that of the red as the primary color; green having a chroma different from that of the green as the primary color; and blue having a chroma different from that of the blue as the primary color.

An image display method according to one embodiment of the present invention is a method for displaying an image on a display section in which color filters of sub-pixel colors that are M colors in total including three principal colors of red, green, and blue, as well as at least one color other than the three principal colors, are arranged regularly, wherein the M sub-pixel colors are divided into N groups in such a manner that there is at least one group to which two or more colors belong, and the method includes performing gray-scale processing by a dither method with respect to an input image signal, by using N combinations of dither matrices corresponding to the N groups, respectively.

### Embodiment

The following explains embodiments of the present invention in detail, while referring to the drawings. The same or equivalent portions are denoted by the same reference numerals in the drawings, and duplicate descriptions are avoided. It should be noted that the following explanations refer to exemplary embodiments as transmission-type liquid crystal display devices, but the present invention can be applied to different liquid crystal display devices than transmission-type ones.

### Embodiment 1

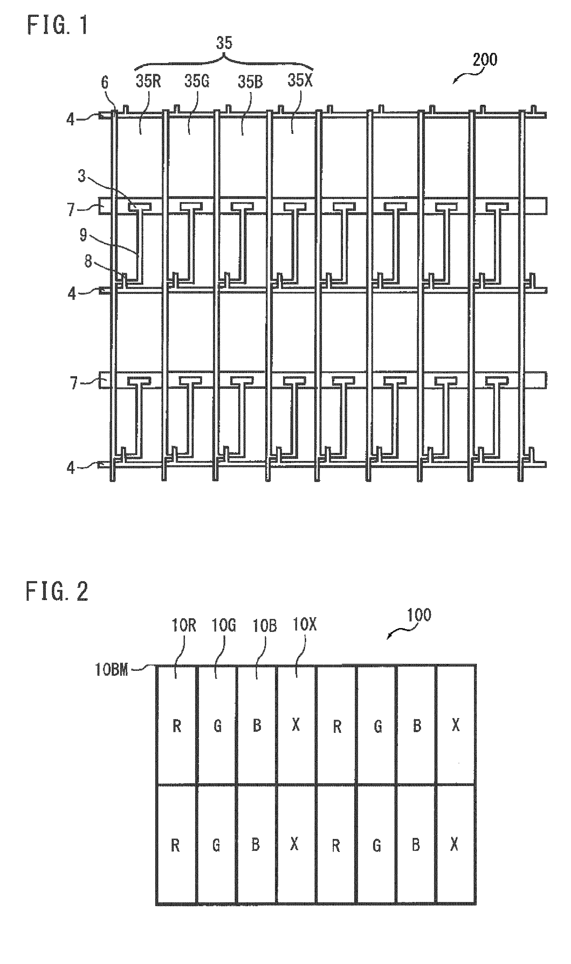

FIG. 1 is a plan view showing a schematic configuration of an active matrix substrate 200 provided in a liquid crystal display device according to Embodiment 1.

As shown in FIG. 1, the active matrix substrate 200 has a plurality of scanning lines 4 and signal lines 6 arranged in matrix. At each of intersections of the scanning lines 4 and the signal lines 6, a thin-film transistor (TFT) 8 is provided. Each of areas surrounded by the scanning lines 4 and the signal line 6 is provided with a pixel electrode 35. The pixel electrodes 35 are formed with a transparent conductive material such as indium tin oxide (ITO) or the like.

In the example shown in FIG. 1, the pixel electrodes 35R among the pixel electrodes 35 are pixel electrodes facing color filters of red (R) in a color filter substrate that will be described later. Likewise, the pixel electrodes 35G and 35B are pixel electrodes facing color filters of green (G) and blue (B), respectively. Pixel electrodes 35X are pixel electrodes facing color filters of a color (X) other than the three principal colors of red, green, and blue. It should be noted that cyan, magenta, yellow, white, red having a chroma different from that of the red as the primary color, green having a chroma different from that of the green as the primary color, blue having a chroma different from that of the blue as the primary color, or the like is appropriate as the color X, though it is not limited to these.

In the case where cyan, magenta, or yellow is used as the color X, an effect of obtaining a widened color range, for example, can be achieved, as compared with the case where only the three principal colors of red, green, and blue are used as sub-pixel colors. In the case where white is used as the color X, the brightness can be increase. In the case where red having a chroma different from that of the red as the primary color, green having a chroma different from that of the green as the primary color, or blue having a chroma different from that of the blue as the primary color, is used as the color X, deeper colors can be reproduced.

In other words, a liquid crystal display device 500 uses four colors in total as sub-pixel colors, which are three primary colors of red, green, and blue, as well as the color (X) other than the three primary colors. In the liquid crystal display device 500 according to Embodiment 1, one pixel is composed of sub-pixels of four colors, as will be described in more detail later. In other words, M=4 is satisfied in Embodiment 1.

The gate electrode of each TFT 8 is connected to the scanning line 4. The source electrode of the TFT 8 is connected to the signal line 6. The drain electrode of the TFT 8 is connected to the pixel electrode 35 via a drain lead line 9. An auxiliary capacitance line 7 for holding a voltage applied to the pixel electrode 35 is arranged in parallel with each scanning line 4. The auxiliary capacitance line 7 a terminal portion of the drain lead line 9 with an insulative film being interposed therebetween, so as to form an auxiliary capacitor 3.

FIG. 2 is a plan view showing a schematic configuration of a color filter substrate (counter substrate) 100 provided in the liquid crystal display device according to Embodiment 1.

In the color filter substrate 100, as shown in FIG. 2, color filters 10R, 10G, and 10B of three primary colors of red, green, and blue, and color filters 10X of a color (X) other than these three primary colors, are arranged in the stated order in a stripe form. It should be noted that the color of the color filters 10X is, for example, cyan, magenta, yellow, white, red having a chroma different from that of the red as the primary color, having a chroma different from that of the green as the primary color, blue having a chroma different from that of the blue as the primary color, or the like, as described above.

A black matrix 10BM is provided in spaces around the color filters and between the filters. It should be noted that the color filters 10R) 10G, 10B, and 10X have characteristics of selectively transmitting components in vicinities of specific wavelengths, respectively. More specifically, the color filters 10R, 10G, and 10B of red, green and blue mainly transmit red components, green components, and blue components of incident light, respectively. The color filters 10X, for example, in the case where they have a color of yellow, mainly transmit both of red components and green components of incident light.

The color filters 10R 10G, 10B, and 10X are provided so as to face the pixel electrodes 35R, 35G, 35B, and 35X provided in the active matrix substrate 200 described above, respectively, in the liquid crystal display device. The black matrix 10BM is provided so as to face the scanning lines 4 and the signal lines 6, in the liquid crystal display device.

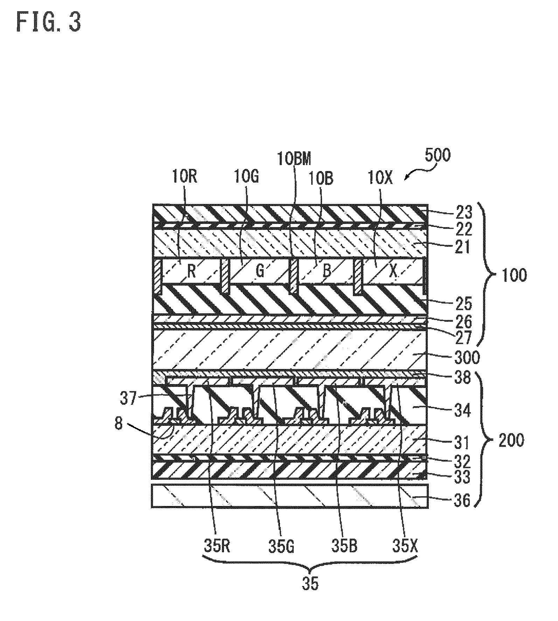

FIG. 3 is a schematic cross-sectional view showing a schematic structure of the liquid crystal display device according to Embodiment 1.

As shown in FIG. 3, the liquid crystal display device 500 of the present embodiment has a liquid crystal layer 300 between the color filter substrate 100 and the active matrix substrate 200. The color filter substrate 100 has a phase difference plate 22 and a polarizing plate 23 on an outer side (observed face side) of a glass substrate 21. On an inner side (back face side) of the glass substrate 21, the color filter substrate 100 has the color filters 10R, 10G, 10B, and 10X, the black matrix 10BM, an overcoat layer 25, a counter electrode 26, and an alignment film 27.

The phase difference plate 22 adjusts a polarization state of light transmitted therethrough. The polarizing plate 23 transmits only light of a specific polarized light component. In the present embodiment, the arrangement and configuration of the phase difference plate 22 and the polarizing plate 23 are adjusted so that the phase difference plate 22 and the polarizing plate 23 function as a circularly polarizing plate.

The overcoat layer 25 prevents contaminants from being eluted into the liquid crystal layer 300 from the color filters 10R, 10G, 10B, and 10X, and flattens the surface of the color filter substrate 100. The counter electrode 26 is formed over an entire surface of the color filter substrate 100. The counter electrode 26 is formed of a transparent conductive material such as indium tin oxide (ITO) or the like. The alignment film 27 controls the alignment of liquid crystal molecules in the liquid crystal layer 300.

The active matrix substrate 200 has a phase difference plate 32 and a polarizing plate 33 on an outer side (back face side) of a glass substrate 31. On an inner side (observed face side) of the glass substrate 31, there are provided thin film transistors (TFTs) 8, an interlayer insulative film 34, pixel electrodes 35 (35R, 35G, 35B, and 35X), an alignment film 38, and the like.

The phase difference plate 32 adjusts a polarization state of light transmitted therethrough, as is the case with the phase difference plate 22. The polarizing plate 33 transmits only light of a specific polarized light component, as is the case with the polarizing plate 23. In the present embodiment, the polarizing plate 33 is arranged so that the polarization axis of the polarizing plate 33 and the polarizing axis of the circularly polarizing plate (the phase difference plate 22 and the polarizing plate 23) provided on the color filter substrate 100 side cross each other orthogonally.

It should be noted that the above-described settings of the phase difference plate 22, the polarizing plate 23, the phase difference plate 32, and the polarizing plate 33 are merely exemplary. These optical members may be set so as to realize different optical characteristics. Depending on the liquid crystal mode, required optical characteristics, etc., at least one of the phase difference plate and the polarizing plate is not required in some cases.

The pixel electrodes 35 (35R, 35G, 35B, and 35X) are connected to the TFTs 8 via contact holes 37, respectively. The pixel electrodes 35 are driven by the TFTs 8, apply voltages to the liquid crystal layer 300, thereby driving liquid crystal molecules. The alignment film 38 controls liquid crystal molecules in the liquid crystal layer 300, as is the case with the alignment film 27.

On a reverse face side (back side) of the active matrix substrate 200, a backlight 36 is provided. It should be noted that, though the liquid crystal display device 500 shown herein as an example is provided with the back light 36 as it is a transmission-type liquid crystal display device, the backlight is unnecessary in other cases.

FIGS. 1 to 3 show an example in which the pixel electrodes 35R, 35G, 35B, and 35X and the color filters 10R, 10G, 10G, and 10X have uniform widths, but the widths of the pixel electrodes and the color filters may be different color by color. Further, FIGS. 1 to 3 show an example in which one pixel is divided only in the horizontal direction into sub-pixels, but one pixel may be divided in both of the horizontal and vertical directions into sub-pixels. Still further, the shape of the sub-pixel may not be rectangular.

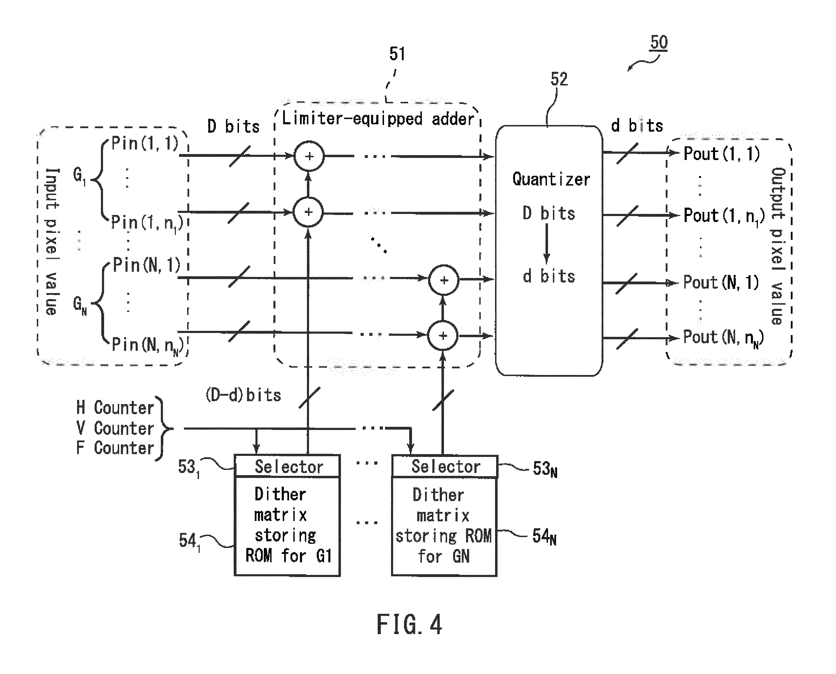

The liquid crystal display device 500 in the above-described configuration performs gray-scale reproduction processing by the dither method with respect to input image signals, in order prevent pseudo-contours. FIG. 4 is a block diagram showing a schematic configuration of a gray-scale processing circuit 50 provided in the liquid crystal display device 500.

The gray-scale processing circuit 50 adds noises to a D-bit input pixel value to quantize the same, thereby generating a d-bit output pixel value. It should be noted that "D" and "d" are integers that satisfy the relationship ofD>d.

As shown in FIG. 4, the gray-scale processing circuit 50 includes a limiter-equipped adder 51, a quantizer 52, selectors 53₁ to 53_{N}, and dither matrix storing ROM (dither matrix storage parts) 54₁ to 54_{N}. It should be noted that N is an integer of 2 or more, and represents the number of groups of sub-pixel colors. Regarding the groups of the sub-pixel colors, detailed explanation will be made later, with reference to specific examples.

An input image signal to the gray-scale processing circuit 50 is fed as pixel values of sub-pixels belonging to respective groups Gᵢ of sub-pixel colors sharing dither matrices, that is, sub-pixel values Pin (i, j). Each sub-pixel value Pin (i, j) has D-bit information. It should be noted that i and j satisfy i=1 to N and j=1to n₁. n₁ represents the number of sub pixel colors belonging to a group Gᵢ. nᵢ is 1 in some cases. In other words, the group Gᵢ with nᵢ=1 is a group to which only one sub-pixel color belongs.

The dither matrix storage ROMs 54₁ to 54_{N} store different dither matrices, corresponding to the groups G₁ to G_{N} of the sub-pixel colors, respectively. Each dither matrix specifies numerical value data (dither coefficients) for giving noises to input signals by the dither method. Each dither coefficient has (D-d)-bit information. For example, let a horizontal periodic length, a vertical periodic length, and a frame (field) periodic length to be L_{H}, Lv, and L_{F}, respectively, and a data capacity necessary for storing dither matrices in the dither matrix storage ROMs 54₁ to 54_{N} is (D-d)L_{H}L_{V}L_{F}N bits. Therefore, as the value of N is decreased, the capacity of the dither matrix storage ROMs can be decreased. Besides, as the value of N is smaller, the development costs for generating dither matrices can be decreased.

It should be noted that FIG. 4 shows the dither matrix storage ROMs 54₁ to 54_{N} as separate ROMS, but it is not necessary to provide a plurality of independent ROMs as hardware. For example, the configuration may be as follows: there are provided a region for storing dither matrices for the group G₁, a region for storing dither matrices for the group G₂, ... and a region for storing dither matrices for the group G_{N} in a common ROM.

The selectors 53₁ to 53_{N} select dither coefficients from the dither matrix storage ROMs 54₁ to 54_{N}, based on input pixel position information given from an H counter, a V counter, and an F counter provided outside the gray-scale processing circuit 50, and outputs the selected dither coefficient to the limiter-equipped adder 51. The H counter provides information about a pixel position in the horizontal direction. The V counter provides information about a pixel position in the vertical direction. The F counter provides information about a frame (field).

The limiter-equipped adder 51 adds an input pixel value and a dither coefficient, and outputs the same to the quantizer 52. The limiter-equipped adder 51 adds a dither coefficient given from the dither matrix storage ROM 54ᵢ to a sub-pixel value Pin (i, j) belonging to the group Gᵢ. Here, the limiter-equipped adder 51 limits a value as the addition result so that the value should not have more than D bits.

The quantizer 52 drops off lower (D-d) bits of the input pixel value, and outputs, as an output image signal, a sub-pixel value Pout (i, j) thus obtained by quantizing the D-bit signal into a d-bit signal.

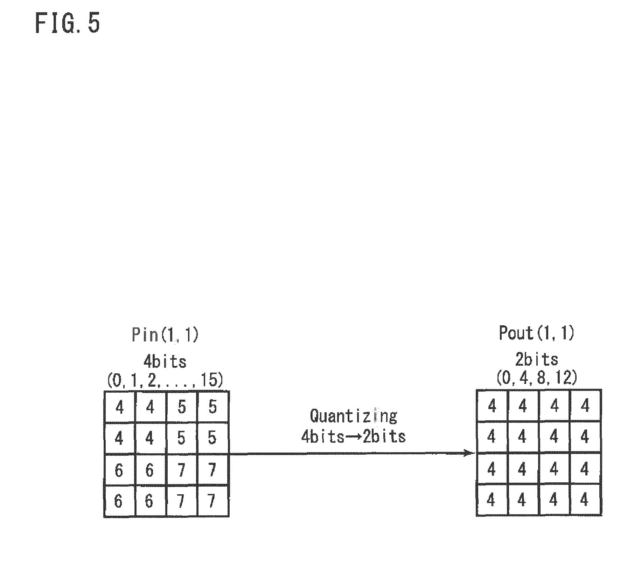

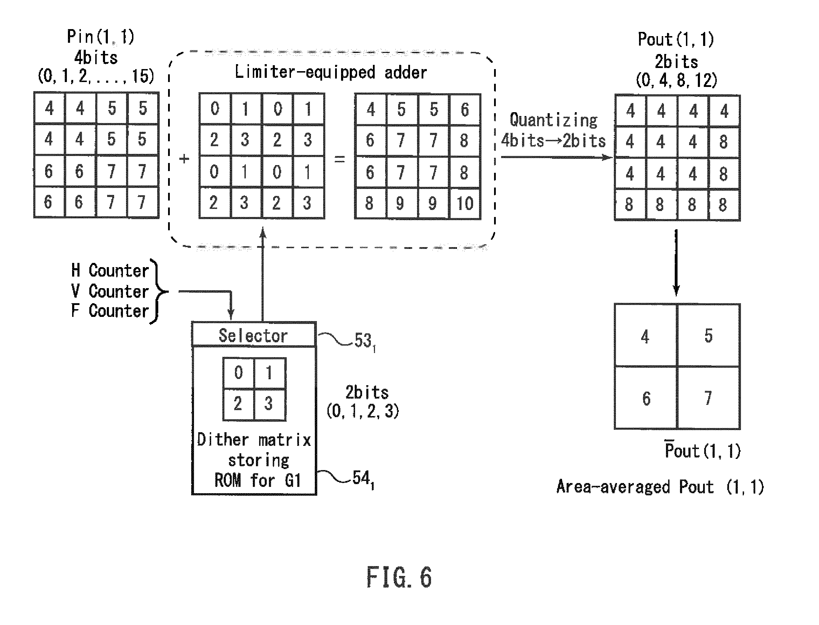

Here, the following explains the dither processing while referring to FIGS. 5 and 6. FIGS. 5 and 6 show examples in which an input image signal Pin (1, 1) having 4-bit gray scale (0, 1, 2, ... 15) is quantized, for example, into an output image signal Pout (1, 1) having a 2-bit gray scale, for a display device that only can display an image having a 2-bit gray scale (0, 4, 8, 12). It should be noted that FIG. 5 shows an example in which the dither processing is not performed, and FIG. 6 shows an example in which the dither processing is performed.

As shown in FIG. 5, in the case where the quantization from four bits to two bits is carried out simply, without the dither processing, lower two bits of the input image signal Pin (1, 1) are dropped off. Consequently, all of pixel values of the output image signal Pout (1, 1) become "4", whereby the gray scale is lost.

On the other hand, as shown in FIG. 6, in the case where the dither processing is performed, a dither coefficient is added to an input image signal Pin (1, 1), whereby noises of the least bit are added to the input image signal Pin (1, 1). For example, in the example shown in FIG. 6, a matrix composed of two rows arrayed vertical direction and two columns arrayed in the horizontal direction is stored as a dither matrix in the dither matrix storage ROM 54₁. The limiter-equipped adder 51 adds this dither matrix to the input image signal Pin (1, 1) and thereafter quantizes the same, whereby the gray scale of an output image signal Pout (1, 1) is maintained areally, as shown in FIG. 6.

Thus, by the dither processing performed by the gray-scale processing circuit 50, image quality degradation such as a pseudo-contour or the like generated due to the reduction of the number of gray levels can be prevented.

It should be noted that FIG. 6 shows an example in which the gray scale is maintained areally, but the gray scale may be maintained temporally. Further, the gray scale may be maintained both areally and temporally.

Here, the following explains a preferable example of the grouping of sub-pixel colors. The gray-scale processing circuit 50 according to the present embodiment has dither matrix storage ROMs that respectively correspond to a plurality of groups G₁ to G_{N} into which sub-pixel colors are divided, as explained above with reference to FIG. 4.

As described above, in the case where four colors in total, including the three principal colors of red (R), green (G), and blue (G), as well as a color (X) other than these three principal colors, are used as sub-pixel colors, the following combinations of these sub-pixel colors are available, as combinations obtained by the method of dividing these sub-pixel colors into a plurality of groups in such a manner that there exists at least one group to which two or more colors belong. It should be noted that the combinations do not depend on the group numbers. That is, for example, the combination shown below of G₁=(R, G, B) and G₂=(X) is treated as synonymous with the combination of G₁=(X) and G₂=(R, G, B).

(1) G₁=(R, G, B) G₂=(X)
(2) G₁=(R, G, X) G₂=(B)
(3) G₁=(R, B, X) G₂=(G)
(4) G₁=(G, B, X) G₂=(R)
(5) G₁=(R, G) G₂=(B, X)
(6) G₁=(R, B) G₂=(G, X)
(7) G₁=(R, X) G₂=(G, B)
(8) G₁=(R, G) G₂=(B) G₃=(X)
(9) G₁=(R, B) G₂=(G) G₃=(X)
(10) G₁=(R, X) G₂=(G) G₃=(B)
(11) G₁=(G, B) G₂=(R) G₃=(X)
(12) G₁=(G, X) G₂=(R) G₃=(B)
(13) G₁=(B, X) G₂=(R) G₃=(G)
Among the 13 combinations described above, each of the combinations (1) to (7) includes two groups (i.e., N=2), and each of the combinations (8) to (13) includes three groups (i.e., N=3). Therefore, in any of the cases where the combinations (1) to (7) are applied to an input pixel signal, the number of groups is two, whereby only two dither matrix storage ROMs are required. In the where any one of the combinations (8) to (13) is applied to an input pixel signal, the number of groups is three, whereby only three dither matrix storage ROMs are required.

It should be noted that the brightness relationship of sub-pixel colors is preferably taken into consideration when the sub-pixel colors are grouped. More specifically, the grouping is performed preferably in such a manner that the requirement that sub-pixel colors having brightnesses close to one another belong to the same group should be satisfied. For example, in the case where the brightnesses of four colors R, G, B, and X satisfy the relationship of B<R<G<X, the following six combinations satisfying the foregoing requirement are as fellows, among the above-described 13 combinations.

(1) G₁=(R, G, B) G₂=(X)
(2) G₁=(R, G, X) G₂=(B)
(6) G₁=(R, B) G₂=(G, X)
(8) G₁=(R, G) G₂=(B) G₃=(X)
(9) G₁=(R B) G₂=(G) G₃=(X)
(12) G₁=(G, X) G₂=(R) G₃--(B)
It should be noted that the above-described examples are preferable examples in the case where the brightnesses of four colors R, G, B, and X satisfy the relationship of B<R<G<X. Therefore, in the case where the relationship of brightnesses of X and the three principal colors R, G, and B is different from the foregoing relationship, examples of the preferable combination for grouping are different from those described above.

Further, in the case where the grouping is performed with the brightnesses of sub-pixel colors being taken into consideration as described above, it is further preferable that the arrangement of the color filters 10R 10G, 10B, and 10X of the color filter substrate 100 is designed so as to suppress the generation of artifacts that could function as factors of image quality degradation. More specifically, it is preferable that the color filters 10R, 10G, 10B, and 10X are arranged so that sub-pixel colors belonging to the same group should not be adjacent to one another.

It should be noted that in the case where the color filters 10R, 10G, 10B, and 10X are in a so-called stripe arrangement (an arrangement in which the same colors are adjacent in the vertical direction), sub-pixel colors belonging to the same group may be arranged so as not to be adjacent in the horizontal direction. On the other hand, in the case where the color filters 10R, 10G, 10B, and 10X are arranged in such a manner that different colors are adjacent in the vertical direction, it is preferable that sub-pixel colors belonging to the same group should not be adjacent to one another in any of the horizontal direction and the vertical direction.

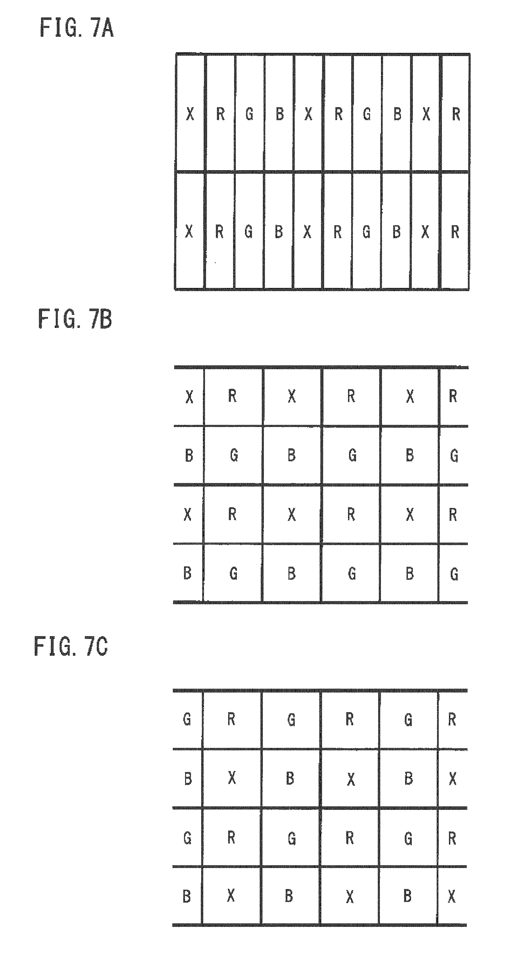

For example, in the cases of the combinations (6), (9), and (12), the color filters 10R, 10G, 10B, and 10X are preferably arranged as shown in FIGS. 7A to 7C. It should be noted that the marks of "R", "G", "B", "X" shown in FIGS. 7A to 7C represent the color filters 10R, 10G, 10B, and 10X, respectively. In FIGS. 7A to 7C, each of regions surrounded by thick lines correspond to one pixel composed of four sub-pixels.

For example, the exemplary arrangement shown in FIG. 7A is a stripe arrangement in which the color filters 10R, 10G, 10B, and 10X are repeatedly arranged in the horizontal direction. As is clear from FIG. 7A, the colors R and B are not adjacent to each other, and the colors G and X are not adjacent to each other in this exemplary arrangement. Therefore, the requirement that sub-pixel colors belonging to the same group are not adjacent is satisfied, regarding the aforementioned combinations (6), (9), and (12).

Besides, in the exemplary arrangement shown in FIG. 7B, four sub-pixels in total consisting of two rows arrayed in the vertical direction and two columns arrayed in the horizontal direction compose one pixel. Further, in one pixel, the color filters 10R, 10X, 10B, and 10G are arranged in the stated order from upper left in the clockwise direction. In this exemplary arrangement, the colors R and B are not adjacent to each other, and the colors G and X are not adjacent to each other, in either of the horizontal and vertical directions. Therefore, the requirement that sub-pixel colors belonging to the same group are not adjacent is satisfied, regarding the aforementioned combinations (6), (9), and (12).

Further, in the exemplary arrangement shown in FIG. 7C as well, four sub-pixels in total consisting of two rows arrayed in the vertical direction and two columns arrayed in the horizontal direction compose one pixel, as is the case with the exemplary arrangement shown in FIG. 7B. In this example, in one pixel, the color filters 10R 10G, 10B, and 10X are arranged in the stated order from upper left in the clockwise direction. In this exemplary arrangement as well, the colors R and B are not adjacent to each other, and the colors G and X are not adjacent to each other, in any of the horizontal and vertical directions. Therefore, the requirement that sub-pixel colors belonging to the same group are not adjacent is satisfied, regarding the aforementioned combinations (6), (9), and (12).

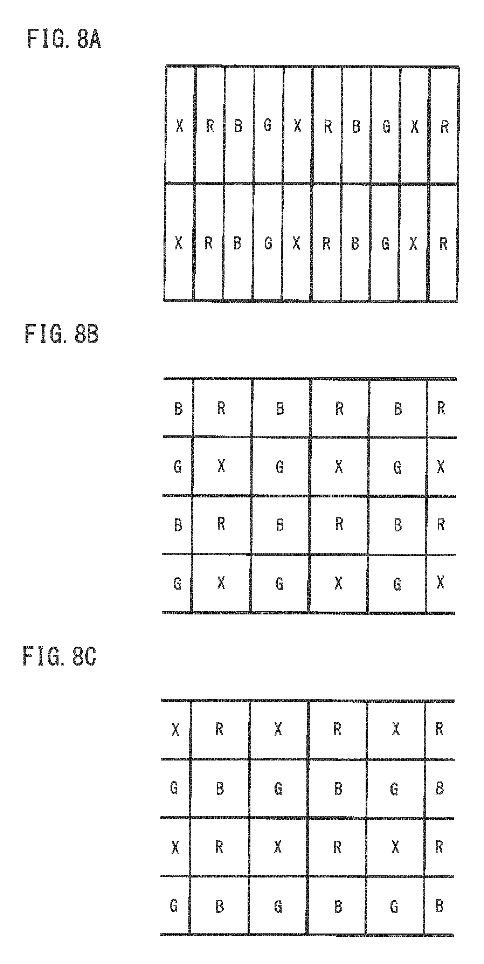

Still further, in the case of the combination (8), the color filters 10R, 10G, 10B, and 10X are preferably arranged as shown in FIGS. 8A to 8C.

The exemplary arrangement shown in FIG. 8A is a stripe arrangement in which the color filters 10R, 10B, 10G, and 10X are arranged in the stated order repeatedly in the horizontal direction. As is clear from FIG. 8A, since the colors R and G are not adjacent to each other in this exemplary arrangement, the requirement that sub-pixel colors (R and G) belonging to the same group are not adjacent is satisfied, regarding the aforementioned combination (8).

In the exemplary arrangement shown in FIG. 8B, four sub-pixels in total consisting of two rows arrayed in the vertical direction and two columns arrayed in the horizontal direction compose one pixel. In one pixel, the color filters 10R, 10B, 10G, and 10X are arranged in the stated order from upper left in the clockwise direction.
In this exemplary arrangement, the colors R and G are not adjacent in any of the horizontal and vertical directions. Therefore, the requirement that sub-pixel colors belonging to the same group are not adjacent is regarding the aforementioned combination (8).

Further, in the exemplary arrangement shown in FIG. 8C as well, four sub-pixels in total consisting of two rows arrayed in the vertical direction and two columns arrayed in the horizontal direction compose one pixel, as is the case with the exemplary arrangement of FIG. 8B. In this example, in one pixel, the color filters 10R, 10X, 10G, and 10B are arranged in the stated order from upper left in the clockwise direction. In this exemplary arrangement as well, the colors R and G are not adjacent in any of the horizontal and vertical directions. Therefore, the requirement that sub-pixel colors belonging to the same group are not adjacent is satisfied, regarding the aforementioned combination (8).

It should be noted that the exemplary arrangements of color filters shown in FIGS. 7A to 7C and 8A to 8C are merely a part of examples of the present embodiment, and the embodiment of the present invention is not limited to these specific examples. In addition to these examples, there are available other variations of color filter arrangements.

As described above, in Embodiment 1, in the case where four colors of R, G, B, X are used as the colors of sub-pixels composing one pixel, these four colors are divided into a plurality of groups G₁ to G_{N} so that there is at least one group to which two or more colors belong. Besides, the dither matrix storage ROMs 54₁ to 54_{N} are provided so as to correspond to the groups G₁ to G_{N}, respectively. In other words, according to the present embodiment, two or more sub-pixel colors belong to at least one group of the groups G₁ to G_{N}. Therefore, as compared with the configuration in which the dither matrix storage ROMs are provided so as to correspond to the sub-pixel colors, respectively, fewer dither matrix storage ROMs are required.

Further, as described above, the grouping is preferably performed with the relationship of brightnesses of sub-pixel colors being taken into consideration, so as to satisfy the requirement that sub-pixel colors having brightnesses close to one another belong to the same group.

The generation of artifacts that could function as factors of image quality degradation can be suppressed by performing the above-described grouping, and on top of this, designing the arrangement of color filters of the color filter substrate 100 in such a manner that sub-pixel colors belonging to the same group are not adjacent to one another.

### Embodiment 2

Embodiment 2 of the present invention is explained below.

A liquid crystal display device 500 according to Embodiment 2 is different from Embodiment 1 in terms that one pixel is composed of five sub-pixels. In other words, M=5 is satisfied in Embodiment 2. In the following description, the sub-pixel colors in the present embodiment are denoted as "R", "G", "B", "X1", and "X2". In the present embodiment, duplicate explanation is not made regarding portions that have the same configurations as the basic configurations of the liquid crystal display device 500 and the gray-scale processing circuit 50 described in the foregoing description of Embodiment 1.

As the sub-pixel colors X1 and X2, which are other than the colors R, G, and B, the following can be used, for example: cyan; magenta; yellow; white; red having a chroma different from that of the red as the primary color; green having a chroma different from that of the green as the primary color; and blue having a chroma different from that of the blue as the primary color.

The following 50 combinations of these five sub-pixel colors R, G, B, X1, and X2 are available, as combinations obtained by the method of dividing these sub-pixel colors into a plurality of groups in such a manner that there exists at least one group to which two or more colors belong. It should be noted that the combinations do not depend on the group numbers, as is the case with Embodiment 1.

(1) G₁=(R,G,B,X1) G₂=(X2)
(2) G₁=(R,G,B,X2) G₂=(X1)
(3) G₁=(R,G,X1,X2) G₂=(B)
(4) G₁=(R,B,X1,X2) G₂=(G)
(5) G₁=(G,B,X1,X2) G₂=(R)
(6) G₁=(R,G,B) G₂=(X1,X2)
(7) G₁=(R,G,X1) G₂=(B,X2)
(8) G₁=(R,G,X2) G₂=(B,X1)
(9) G₁=(R,B,X1) G₂=(G,X2)
(10)G₁=(R,B,X2) G₂=(G,X1)
(11)G₁=(R,X1,X2) G₂=(G,B)
(12)G₁=(G,B,X1) G₂=(R,X2)
(13)G₁=(G,B,X2) G₂=(R,X1)
(4)G₁=(G,X1,X2) G₂=(R,B)
(15)G₁=(B,X1,X2) G₂=(R,G)
(16)G₁=(R,G) G₂=(B,X1) G₃=(X2)
(17)G₁=(R,G) G₂=(B,X2) G₃=(X1)
(18)G₁=(R,G) G₂=(X1,X2) G₃=(B)
(19)G₁=(R,B) G₂=(G,X1) G₃=(X2)
(20)G₁=(R,B) G₂=(G,X2) G₃=(X1)
(21)G₁=(R,B) G₂=(X1,X2) G₃=(G)
(22)G₁=(R,X1) G₂=(G,B) G₃=(X2)
(23)G₁=(R,X1) G₂=(G,X2) G₃=(B)
(24)G₁=(R,X1) G₂=(B,X2) G₃=(G)
(25)G₁=(R,X2) G₂=(G,B) G₃(X1)
(26)G₁=(R,X2) G₂=(G,X1) G₃=(B)
(27)G₁=(R,X2) G₂=(B,X1) G₃=(G)
(28)G₁=(G,B) G₂=(X1,X2) G₃=(R)
(29)G₁=(G,X1) G₂=(B,X2) G₃=(R)
(30)G₁=(G,X2) G₂=(B,X1) G₃=(R)
(31)G₁=(R,G,B) G₂=(X1) G₃=(X2)
(32)G₁=(R,G,X1) G₂=(B) G₃=(X2)
(33)G₁=(R,G,X2) G₂=(B) G₃=(X1)
(34)G₁-(R,B,X1) G₂=(G) G₃=(X2)
(35)G₁=(R,B,X2) G₂=(G) G₃=(X1)
(36)G₁=(R,X1,X2) G₂=(G) G₃=(B)
(37)G₁=(G,B,X1) G₂=(R) G₃=(X2)
(38)G₁=(G,B,X2) G₂=(R) G₃=(X1)
(39)G₁=(G,X1,X2) G₂=(R) G₃=(B)
(40)G₁=(B,X1,X2) G₂=(R) G₃=(G)
(41)G₁=(R,G) G₂=(B) G₃=(X1) G₄=(X2)
(42)G₁=(R,B) G₂=(G) G₃=(X1) G₄=(X2)
(43)G₁=(R,X1) G₂=(G) G₃=(B) G₄=(X2)
(44)G₁=(R,X2) G₂=(G) G₃=(B) G₄=(X1)
(45)G₁=(G,B) G₂=(R) G₃=(X1) G₄=(X2)
(46)G₁=(G,X1) G₂=(R) G₃=(B) G₄=(X2)
(47)G₁=(G,X2) G₂=(R) G₃=(B) G₄=(X1)
(48)G₁=(B,X1) G₂=(R) G₃=(G) G₄=(X2)
(49)G₁=(B,X2) G₂=(R) G₈=(G) G₄=(X1)
(50)G₁=(X1,X2) G₂=(R) G₃=(G) G₄=(B)
Among the 50 combinations described above, each of the combinations (1) to (15) includes two groups (i.e., N=2), each of the combinations (16) to (40) includes three groups (i.e., N=3), and each of the combinations (41) to (50) includes four groups (i.e., N=4). Therefore, in any of the cases of the combinations (1) to (50), only fewer dither matrix storage ROMs are required, as compared with the case where dither matrix storage ROMs are provided with respect to five sub-pixel colors, respectively.

In Embodiment 2 as well the relationship of brightnesses of the sub-pixel colors is preferably taken into consideration when the sub-pixel colors are grouped. More specifically, the grouping is performed preferably in such a manner that the requirement that sub-pixel colors having brightnesses close to one another belong to the same group should be satisfied. For example, in the case where the brightnesses of five colors R, G, B, X1, and X2 satisfy the relationship of B<R<G<X1<X2, the following 14 combinations satisfying the foregoing requirement are as follows, among the above-described 50 combinations.

(1) G₁=(R, G, B, X1) G₂=(X2)
(3) G₁=(R, G, X1, X2) G₂=(B)
(6) G₁=(R, G, B) G₂=(X1, X₂)
(14) G₁=(G, X1, X2) G₂=(R, B)
(18) G₁=(R, G) G₂=(X1, X2) G₃=(B)
(19) G₁=(R, B) G₂=(G, X1) G₃=(X2)
(21) G₁=(R, B) G₂=(X1, X2) G₃=(G)
(31) G₁=(R, G, B) G₂=(X1) G₃=(X2)
(32) G₁=(R, G, X1) G₂=(B) G₃=(X2)
(39) G₁=(G, X1, X2) G₂=(R) G₃=(B)
(41) G₁=(R, G) G₂=(B) G₃=(X1) G₄=(X2)
(42) G₁=(R, B) G₂=(G) G₃=(X1) G₄=(X2)
(46) G₁=(G, X1) G₂=(R) G₃=(B) G₄=(X2)
(50) G₁=(X1, X2) G₂=(R) G₃=(G) G₄=(B)
It should be noted that the above-described examples are preferable examples in the case where the brightnesses of five colors R, G, B, X1, and X2 satisfy the relationship of B<R<G<X1<X2. Therefore, in the case where the relationship of brightnesses of X1 and X2 as well as the three principal colors R, G, and B is different from the foregoing relationship, examples of the preferable combination for grouping are different from those described above.

Further, in the case where the grouping is performed with brightnesses of sub-pixel colors being taken into consideration, as described above, it is further preferable that the arrangement of the color filters of the color filter substrate 100 is designed so as to suppress the generation of artifacts that could function as factors of image quality degradation. More specifically, it is preferable that the color filters of five colors R, G, B, X1, and X2 are arranged so that sub-pixel colors belonging to the same group should not be adjacent to one another.

It should be noted that in the case where the color filters are in a so-called stripe arrangement (an arrangement in which the same colors are adjacent in the vertical direction), sub-pixel colors belonging to the same group may be arranged so as not to be adjacent in the horizontal direction. On the other hand, in the case where the color filters are arranged in such a manner that different colors are adjacent in the vertical direction, it is preferable that sub-pixel colors belonging to the same group should not be adjacent to one another in any of the horizontal direction and the vertical direction.

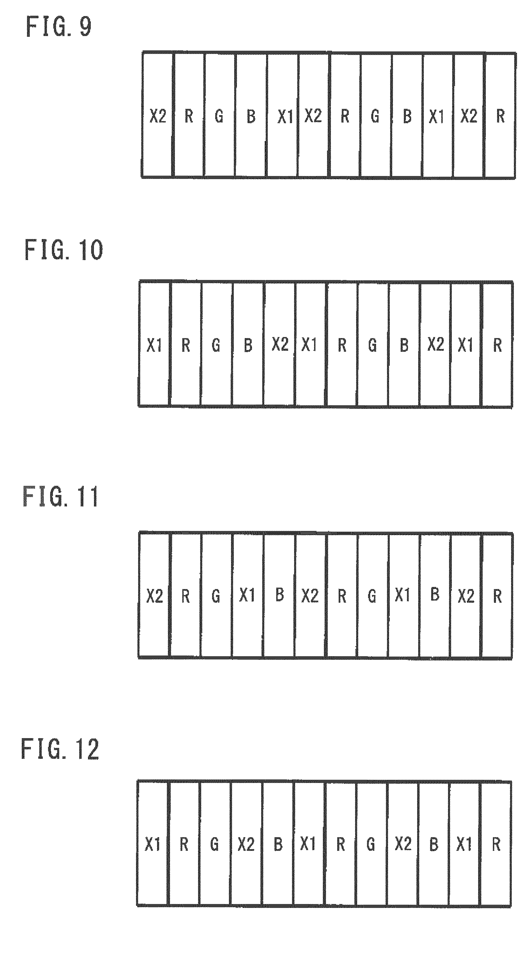

For example, in the cases of the combinations (19), (42), and (46) in the present embodiment, the color filters of five colors R, G, B, X1, and X2 are preferably arranged as shown in FIG. 9. In FIGS. 9 to 37, each of regions surrounded by thick lines corresponds to one pixel composed of sub-pixels of five colors.

According to the exemplary arrangement shown in FIG. 9, the colors R and B are not adjacent to each other, and the colors G and X1 are not adjacent to each other. Therefore, the requirement that sub-pixel colors belonging to the same group are not adjacent is satisfied, regarding the aforementioned combinations (19), (42), and (46) in the present embodiment.

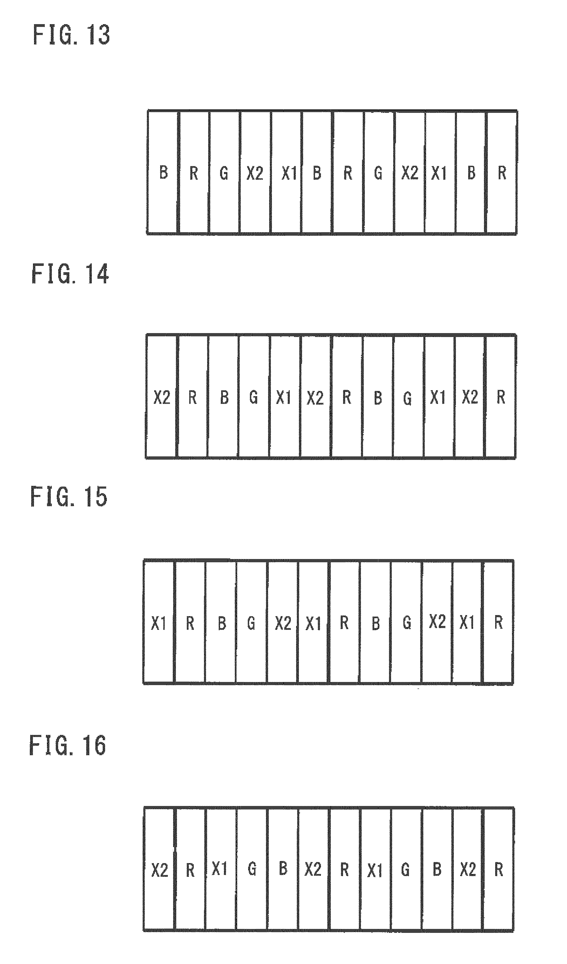

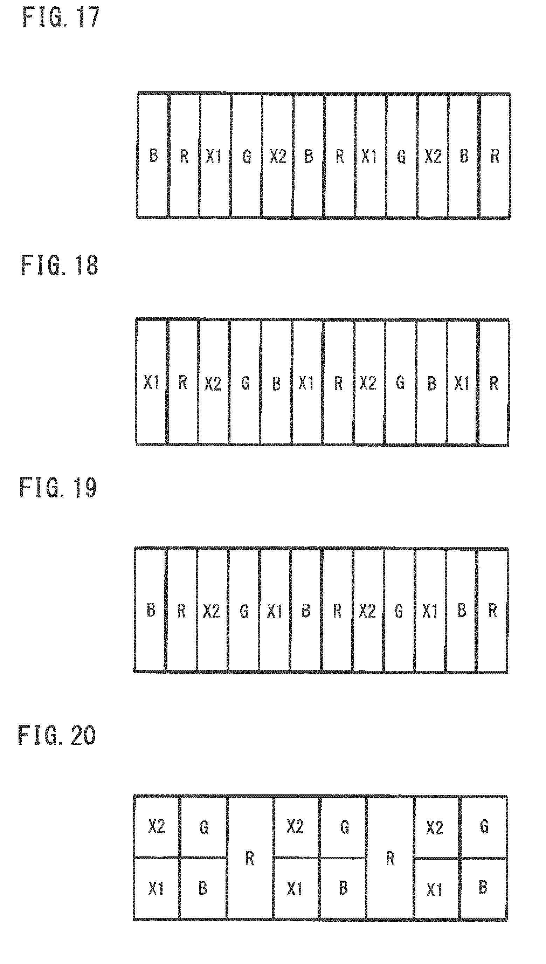

Besides, the exemplary arrangements shown in FIGS. 10 to 19 are stripe arrangements, as is the case with the arrangement shown in FIG. 9. Since the arrangement shown in FIG. 10 satisfies the above-described requirement, it is suitable for, for example, the combinations (19), (42), and (46) in the present embodiment. Likewise, the arrangement shown in FIG. 11 is suitable for, for example, the combinations (21), (42), and (50). The arrangement shown in FIG. 12 is suitable for the combinations (19), (21), (42), (46), and (50). The arrangement shown in FIG. 13 is suitable for, for example, the combination (46). The arrangement shown in FIG. 14 is suitable for, for example, the combination (41). The arrangement shown in FIG. 15 is suitable for, for example, the combinations (41) and (46). The arrangement shown in FIG. 16 is suitable for, for example, the combinations (18), (21), (41), (42), and (50). The arrangement shown in FIG. 17 is suitable for, for example, the combinations (18, (41), and (50). The arrangement shown in FIG. 18 is suitable for, for example, the combinations (18), (19), (21), (41), (42), (46), and (50). The arrangement shown in FIG. 19 is suitable for, for example, the combinations (18), (41), and (50).

In the exemplary arrangements shown in FIGS. 20 to 37, six sub-pixels in total consisting of two rows arrayed in the vertical direction and three columns arrayed in the horizontal direction compose one pixel. Two sub-pixels in the center column in one pixel correspond to one color filter of the same sub pixel color. For example, in the exemplary arrangement shown in FIG. 20, there are arranged a green sub-pixel in the first row of the left column, a blue sub-pixel in the second row of the left column, a red sub-pixel in the center column, a sub-pixel of the color X2 in the fist row of the right column, and a sub-pixel of the color X1 of the second row of the right column.

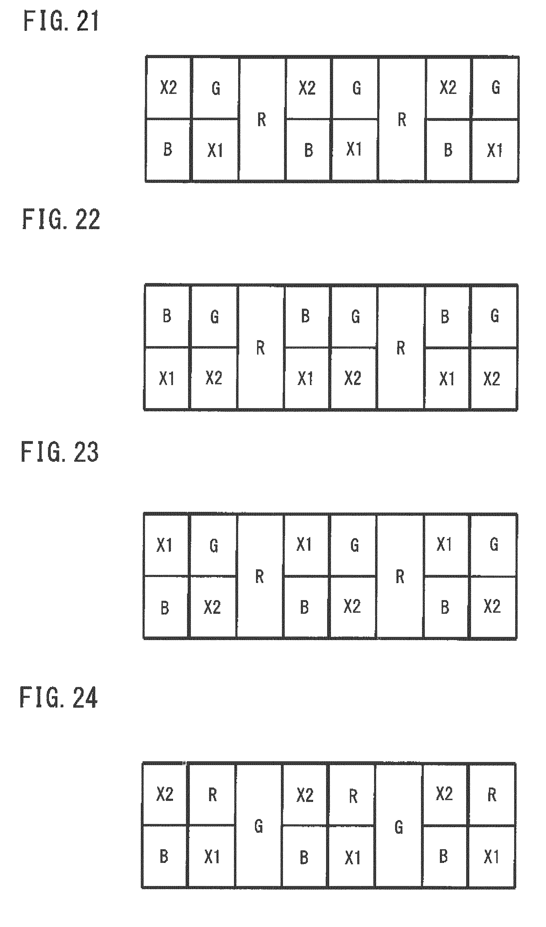

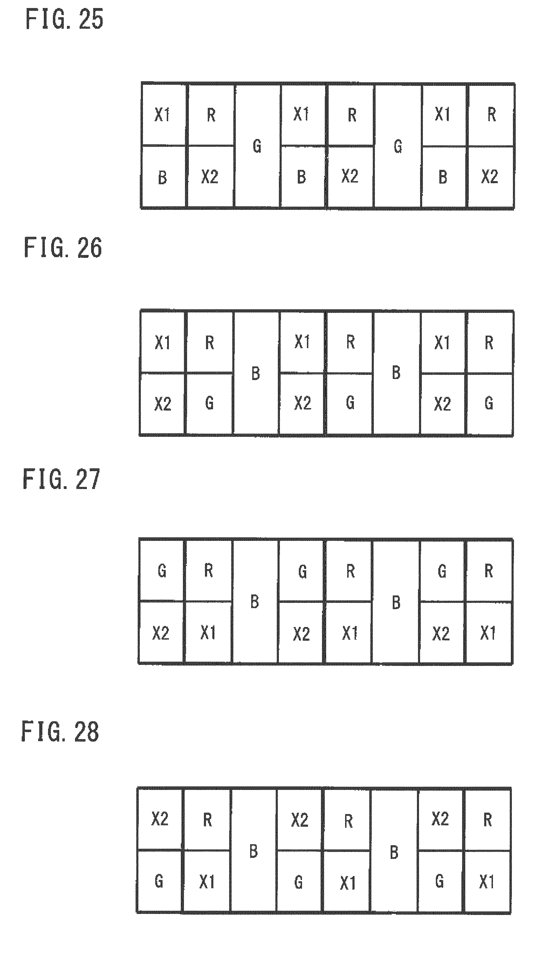

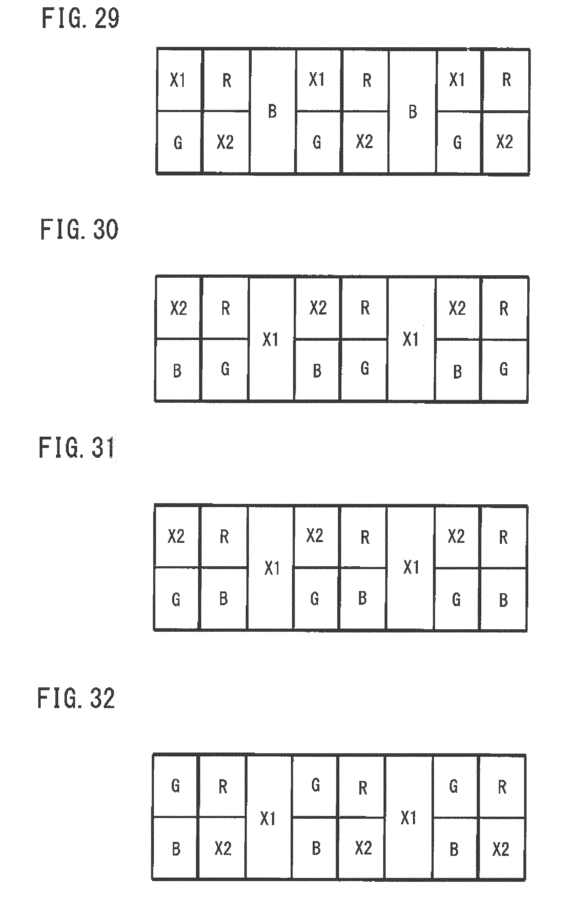

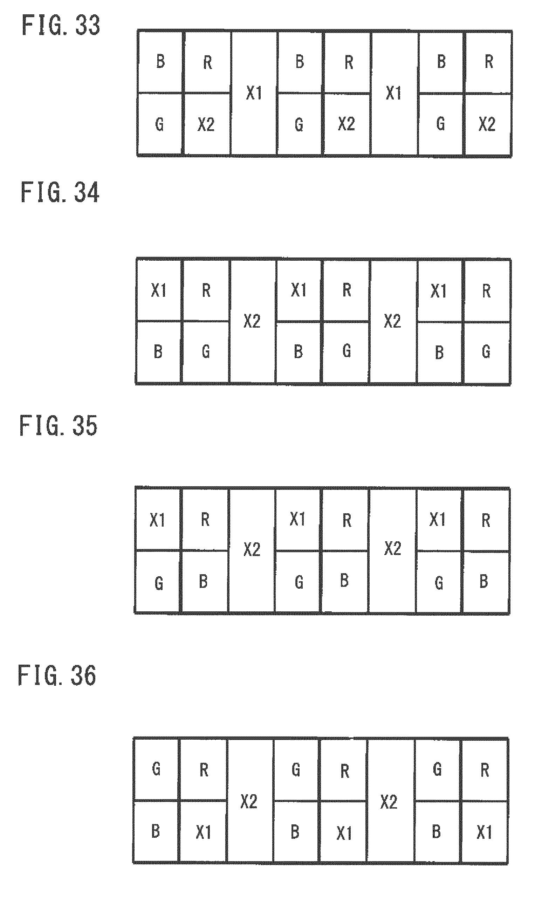

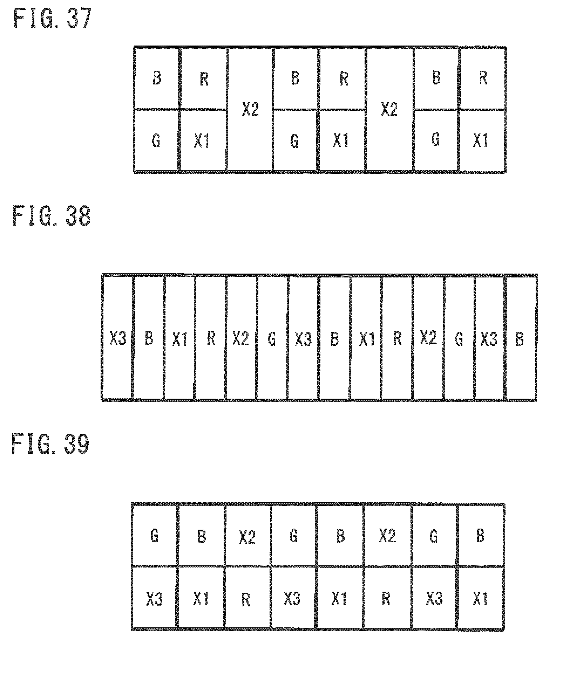

The arrangement shown in FIG. 20 is suitable for, for example, the combination (46). More specifically, according to the arrangement shown in FIG. 20, the sub-pixels of the colors G and X1 belonging to the same group in the combination (46) are not adjacent to each other in any of the horizontal and vertical directions. For the same reason, the arrangement shown in FIG. 21 is suitable for, for example, the combination (50); the arrangement shown in FIG. 22 is suitable for, for example, the combination (46); the arrangement shown in FIG. 23 is suitable for, for example, the combination (50); the arrangement shown in FIG. 24 is suitable for, for example, the combinations (21), (42), and (50); the arrangement shown in FIG. 25 is suitable for, for example, the combinations (21), (42), and (50); the arrangement shown in FIG. 26 is suitable for, for example, the combination (46); the arrangement shown in FIG. 27 is suitable for, for example, the combination (46); the arrangement shown in FIG. 28 is suitable for, for example, the combinations (18), (41), and (50); the arrangement shown in FIG. 29 is suitable for, for example, the combinations (18), (41), and (50); the arrangement shown in FIG. 30 is suitable for, for example, the combination (42); the arrangement shown in FIG. 31 is suitable for, for example, the combination (41); the arrangement shown in FIG. 32 is suitable for, for example, the combination (42); the arrangement shown in FIG. 33 is suitable for, for example, the combination (41); the arrangement shown in FIG. 34 is suitable for, for example, the combinations (19), (42), and (46); the arrangement shown in FIG. 35 is suitable for, for example, the combination (41); the arrangement shown in FIG. 36 is suitable for, for example, the combinations (19), (42), and (46); and the arrangement shown in FIG. 37 is suitable for, for example, the combination (41).

It should be noted that the exemplary arrangements of color filters shown in FIGS. 9 to 37 are merely a part of examples of the present embodiment, and the embodiment of the present invention is not limited to these specific examples. In addition to these examples, there are available other variations of color filter arrangements.

As described above, in Embodiment 2, in the case where five colors of R, G, B, X1, and X2 are used as the colors of sub-pixels composing one pixel, these five colors are divided into a plurality of groups G₁ to G_{N} so that there is at least one group to which two or more colors belong. Besides, the dither matrix storage ROMs 54₁ to 54_{N} are provided so as to correspond to the groups G₁ to G_{N}, respectively. In other words, according to the present embodiment, two or more sub-pixel colors belong to at least one of the groups G₁ to G_{N}. Therefore, as compared with the configuration in which the dither matrix storage ROMs are provided so as to correspond to the sub-pixel colors, respectively, fewer dither matrix storage ROMs are required.

Further, the grouping is preferably performed with the relationship of brightnesses of sub-pixel colors being taken into consideration, so as to satisfy the requirement that sub-pixel colors having brightnesses close to one another belong to the same group. In this case, on top of this, the arrangements of color filters of the color filter substrate 100 may be designed in such a manner that sub-pixel colors belonging to the same group are not adjacent to one another, whereby the generation of artifacts that could function as factors of image quality degradation can be suppressed.

### Embodiment 3

Embodiment 3 of the present invention is explained below.

A liquid crystal display device 500 according to Embodiment 3 is different from Embodiment 1 in terms that one pixel is composed of sub-pixels of six colors. In other words, M=6 is satisfied in Embodiment 3. In the following description, the sub-pixel colors in the present embodiment are denoted as "R", "G", "B", "X1", "X2", and "X3". In the present embodiment, duplicate explanation is not made regarding portions that have the configurations as the basic configurations of the liquid crystal display device 500 and the gray-scale processing circuit 50 described in the foregoing description of Embodiment 1.

As the sub-pixel colors X1, X2, and X3 which are other than the colors R, G, and B, the following can be used, for example: cyan; magenta; yellow; white; red having a chroma different from that of the red as the primary color; green having a chroma different from that of the green as the primary color: and blue having a chroma different from that of the blue as the primary color.

201 combinations of these six sub-pixel colors R, G, B, X1, X2, and X3 are available, as combinations obtained by the method of dividing these six sub-pixel colors R, G, B, X1, X2, and X3 into a plurality of groups in such a manner that there exists at least one group to which two or more colors belong. It should be noted that the individual disclosure of these 201 combinations is omitted in this description of the present embodiment. In the present embodiment as well, the six sub-pixel colors R, G, B, X1, X2, and X3 are divided into a plurality of groups in such a manner that there is at least one group to which two or more of these sub-pixel colors belong, and dither matrix storage ROMs are provided for the groups, respectively. By doing so, fewer dither matrix storage ROMs are required, as compared with the case where dither matrix storage ROMs are provided for the six sub-pixel colors, respectively.

It should be noted that in Embodiment 3 as well, the relationship of brightnesses of sub-pixel colors is preferably taken into consideration, when the sub-pixel colors are grouped. More specifically, the grouping is preferably in such a manner that the requirement that sub-pixel colors having brightnesses close to one another belong to the group is satisfied. For example, in the case where the brightnesses of the above-described six colors R, G, B, X1, X2, and X3 satisfy the relationship of B<R<G<X1<X2<X3, 30 combinations that satisfy this requirement are available. It should be noted that the individual disclosure of these 30 combinations is omitted in the description of the present embodiment.

In the present embodiment as well, in the case where the grouping is performed with the brightnesses of the sub-pixel colors being taken into consideration as described above, it is further preferable that the arrangement of color filters of the color filter substrate 100 is designed so as to suppress the generation of artifacts that could function as factors of image quality degradation. More specifically, it is preferable that the color filters of the six colors R, G, B, X1, X2, and X3 are arranged so that the sub-pixel colors belonging to the same group should not be adjacent to one another.

It should be noted that in the case where the color filters are in a so called stripe arrangement (an arrangement in which the colors are adjacent in the vertical direction), sub-pixel colors belonging to the same group may be arranged so as not to be adjacent in the horizontal direction. On the other hand, in the case where the color filters are arranged in such a manner that different colors are adjacent in the vertical direction, it is preferable that sub-pixel colors belonging to the same group should not be adjacent to one another in any of the horizontal direction and the vertical direction.

For example, in the stripe arrangement shown in FIG. 38, sub-pixels or the three principal colors R, G, and B, and sub-pixels of colors X1, X2, and X3 that are other than the three principal colors, are alternately arranged. The arrangement shown in FIG. 38 is suitable for the combinations (1) to (18) shown below, and the like.

(1) G₁=(B, R) G₂=(G) G₃=(X1) G₄=(X2) G₅=(X3)
(2) G₁=(B) G₂=(R, G) G₃=(X1) G₄=(X2) G₅=(X3)
(3) G₁=(B) G₂(R) G₃=(G, X1) G₄=(X2) G₆=(X3)
(4) G₁=(B) G₂F=(R) G₃=(G) G₄=(X1,X2) G₅=(X3)
(5) G₁=(B) G₂=(R) G₃=(G) G₄=(X1) G₅=(X₂, X3)
(6) G₁=(B, R, G) G₂=(X1) G₃=(X2) G₄=(X1)
(7) G₁=(B) G₂=(R) G₃=(G) G₄=(X1, X2, X3)
(8) G₁=(B,R) G₂=(G, X1) G₃=(X2) G₄=(X3)
(9) G₁=(B, R) G₂=(G) G₃=(X1,X2) G₄=(X3)
(10) G₁=(B, R) G₂=(G) G₃=(X1) G₄=(X2, X3)
(11) G₁=(B) G₂=(R, G) G₃=(X1,X2) G₄=(X3)
(12) G₁=(B) G₂=(R, G) G₃=(X1) G₄=(X2,X3)
(13) G₁=(B) G₂=(R) G₃=(G, X1) G₄=(X2, X3)
(14) G₁=(B, R, G) G₂=(X1, X2) G₃=(X3)
(15) G₁=(B, R, G) G₂=(X1) G₃=(X2,X3)
(16) G₁-(B, R) G₂-(G) G₃=(X1, X2, X3)
(17) G₁=(B) G₂=(R, G) G₃=(X1, X2, X3)
(18) G₁=(B, R) G₂=(G, X1) G₃=(X2, X3)
In the exemplary arrangement shown in FIG. 39, one pixel is composed of six sub-pixels in total consisting of two rows arrayed in the vertical direction and three columns arrayed in the horizontal direction. The exemplary arrangement shown in FIG. 39 is suitable for the combinations (1) to (12) shown below, and the like. In the cases of these combinations, sub-pixel colors belonging to the same group are not adjacent to one another in any of the horizontal and vertical directions.

(1) G₁=(B, R) G₂=(G) G₃=(X1) G₄=(X2) G₅=(X3)
(2) G₁=(B) G₂=(R,G) G₃=(X1) G₄=(X2) G₅=(X3)
(3) G₁=(B) G₂= G₃=(G,X1) G₄=(X2) G₅=(X3)
(4) G₁=(B) G₂=(R) G₃=(G) G₄=(X1,X2) G₅=(X3)
(5) G₁=(B) G₂=(R) G₃=(G) G₄=(X1) G₅=(X2,X3)
(6) G₁=(B,R) G₂=(G,X1) G₃=(X2) G₄=(X3)
(7) G₁=(B,R) G₂=(G) G₃=(X1,X2) G₄=(X3)
(8) G₁=(B,R) G₂=(G) G₃=(X1) G₄=(X2,X3)
(9) G₁=(B) G₂=(R,G) G₃=(X1,X2) G₄=(X3)
(10) G₁=(B) G₂=(R,G) G₃=(X1) G₄=(X2,X3)
(11) G₁=(B) G₂=(R) G₃=(G,X1) G₄=(X2,X3)
(12) G₁=(B,R) G₂=(G,X1) G₃=(X2,X3)
It should be noted that the exemplary arrangements of color filters shown in FIGS. 38 and 39 are merely a part of examples of the present embodiment, and the embodiment of the present invention is not limited to these specific examples. In addition to these examples, there are available other variations of color filter arrangements.

As described above, in Embodiment 3, in the case where six colors of R, G, B, X1, X2, and X3 are used as the colors of sub-pixels composing one pixel, these six colors are divided into a plurality of groups G₁ to G_{N} so that there is at least one group to which two or more colors belong. Besides, the dither matrix storage ROMs 54₁ to 54_{N} are provided so as to correspond to the groups G₁ to G_{N}, respectively. In other words, in Embodiment 3 as well, two or more sub-pixel colors belong to at least one group of the groups G₁ to G_{N}. Therefore, as compared with the configurations in which the dither matrix storage ROMs are provided so as to correspond to the sub-pixel colors, respectively, fewer dither matrix storage ROMs are required.

Further, the grouping is preferably performed with the relationship of brightnesses of sub-pixel colors being taken into consideration, so as to satisfy the requirement that sub-pixel colors having brightnesses close to one another belong to the same group. In this case, on top of this, the arrangement of color filters of the color filter substrate 100 may be designed in such a manner that sub-pixel colors belonging to the same group are not adjacent to one another, whereby the generation of artifacts that could function as factors of image quality degradation can be suppressed.

So far the embodiments of the present invention have been explained, but the above-described embodiments are merely examples for embodying the present invention. Thus, the present invention is not limited to the above-described embodiments, and may be embodied by appropriately modifying the above-described various types of embodiments, within the of the spirit of the present invention.

### Industrial Applicability

The present invention is industrially applicable as an image display device that performs gray-scale processing by using the dither method.

## Claims

1. An image display device comprising:
a display section in which color filters of sub-pixel colors that are M colors in total including three principal colors of red, green, and blue, as well as at least one color other than the three principal colors are arranged regularly; and
a gray-scale processing section that performs gray-scale processing by a dither method with respect to an input image signal,
wherein the M sub-pixel colors are divided into N groups in such a manner that there is at least one group to which two or more colors belong, and
the gray-scale processing section includes dither matrix storage parts that store N combinations of dither matrices corresponding to the N groups, respectively.

2. The image display device according to claim 1,
wherein the gray-scale processing section further includes;
a selector that selects a dither coefficient out of the N combinations of dither matrices in the dither matrix storage parts, based on position information of the input image signal;
a limiter-equipped adder that adds a dither coefficient selected by the selector to an input image signal, limits the addition result under predetermined conditions and outputs the same; and
a quantizer that decreases the number of bits of an output from the limiter-equipped adder.

3. The image display device according to claim 1 or 2, wherein sub-pixel colors having brightnesses close to one another, among the M sub-pixel colors, belong to a same group.

4. The image display device according to any one of claims 1 to 3, wherein, in the display section, the color filters are arranged in such a manner that the color filters of the sub-pixel colors belonging to the same group are not adjacent to one another in a horizontal direction.

5. The image display device according to any one of claims 1 to 3, wherein, in the display section, the color filters are arranged in such a manner that the color filters of the sub-pixel colors belonging to the same group are not adjacent to one another in any of a horizontal direction and a vertical direction.

6. The image display device according to any one of claims 1 to 5, wherein the M sub-pixel colors are four colors in total that are three principal colors of red, green, and blue, as well as one color other than the three principal colors.

7. The image display device according to claim 6, wherein the one color other than the three primary colors is any one of cyan; magenta; yellow; white; red having a chroma different from that of the red as the primary color; green having a chroma different from that of the green as the primary color; and blue having a chroma different from that of the blue as the primary color.

8. The image display device according to any one of claims 1 to 5, wherein the M sub-pixel colors are five colors in total that are three principal colors of red, green, and blue, as well as two colors other than the three principal colors.

9. The image display device according to claim 8, wherein the two colors other than the three primary colors are any two of cyan; magenta; yellow; white; red having a chroma different from that of the red as the primary color; green having a chroma different from that of the green as the primary color; and blue having a chroma different from that of the blue as the primary color.

10. The image display device according to any one of claims 1 to 5, wherein the M sub-pixel colors are six colors in total that are three principal colors of red, green, and blue, as well as three colors other than the three principal colors.

11. The image display device according to claim 10, wherein the three colors other than the three primary colors are any three of cyan; magenta; yellow; white; red having a chroma different from that of the red as the primary color; green having a chroma different from that of the green as the primary color; and blue having a chroma different from that of the blue as the primary color.

12. A method for displaying an image on a display section in which color filters of sub-pixel colors that are M colors in total including three principal colors of red, green, and blue, as well as at least one color other than the three principal colors are arranged regularly, the method comprising:
dividing the M sub-pixel colors into N groups in such a manner that there is at least one group to which two or more colors belong; and
performing gray-scale processing by a dither method with respect to an input image signal, by using N combinations of dither matrices that correspond to the N groups, respectively.
